# EUROPÄISCHE PATENTSCHRIFT

(11) **EP 0 573 037 B1**
(45) Veröffentlichungstag und Bekanntmachung des Hinweises auf die Patenterteilung: **26.02.1997**
(21) Anmeldenummer: 93108935.3
(22) Anmeldetag: 03.06.1993
(51) Int. Cl.: C08F 218/10, C09D 131/04

(54) **Beschichtungsmittel zur Beschichtung von Aluminium**
Coating agent for coating aluminium
Agent de revêtement pour revêtir l'aluminium

(30) Priorität: 05.06.1992 DE 4218663
(43) Veröffentlichungstag der Anmeldung: 08.12.1993
(73) Patentinhaber: Wacker-Chemie GmbH, 81737 München (DE)
(72) Erfinder: Heiling, Peter, Dr., W-8263 Burghausen (DE); Gorzel, Dieter, W-8263 Burghausen (DE); Tschirner, Peter, W-8261 Emmerting (DE)

(56) Entgegenhaltungen:
- EP-A- 0 315 278
- EP-A- 0 376 411
- EP-A- 0 516 201
- GB-A- 993 470
- GB-A- 1 145 564

## Beschreibung

Die Erfindung betrifft eine Beschichtungsmittel-Zusammensetzung zur Beschichtung von Aluminium auf der Basis von Vinylestercopolymerisaten.

Viele Dinge des täglichen Lebens, vor allem im Lebensmittel-, Kosmetik- und Medizinbereich werden mit flexiblen Materialien verpackt. Zu diesen Verpackungsmaterialien gehört auch im großen Umfang Aluminiumfolie. Diese kann allein oder in Kombination mit anderen Substanzen wie Kunststoffen ( PE, PP, PS, PVC, PET usw), Glas oder Karton verwendet werden. Um beispielsweise die genannten Materialien mit der Aluminiumfolie zu verschließen, wird die Methode des Heißsiegelns benutzt, das bedeutet, daß die Materialien durch Anwendung von erhöhter Temperatur und Druck fest miteinander verbunden werden. Da aber die unbehandelte Aluminiumfolie nicht siegelfähig ist, wird sie mit einem Polymerfilm, dem Heißsiegellack oder auch Heißsiegelkleber, überzogen. Das Polymer wird beim Vorgang des Siegelns durch die erhöhte Temperatur weich und sorgt im Zusammenspiel mit dem angewendeten Pressdruck für den Verbund der zu siegelnden Materialien im erkalteten Zustand. Ein Heißsiegellack sollte also eine gute Haftung auf Aluminiumfolie aufweisen, transparent, überlackierbar, gut siegelfähig mit sich selbst und anderen Materialien, lagerstabil und physiologisch unbedenklich sein, eine Glasübergangstemperatur von maximal 100°C besitzen und gleichzeitig einen möglichst hohen Blockpunkt aufweisen, um ein Verkleben der beschichteten Alufolie zu vermeiden.

Als Heißsiegellacke für die Aluminiumfolienlackierung werden vor allem Polyacrylate bzw. Polymethacrylate, wie sie in der EP-A1 417 570 (CA-A 2025368) oder der EP-A2 316 753 beschrieben werden, und chlorhaltige Polymere, wie sie aus der DE-C2 29 06 118 (US-A 4,267,094) bekannt sind, eingesetzt. Ein Nachteil der Polyacrylate bzw. Polymethacrylate ist deren im allgemeinen schlechte Haftung auf Aluminium. Bei der Anwendung dieser Polymeren muß die Aluminiumfolie in den meisten Fällen vorher grundiert werden. Als Primer werden in der Regel chlorhaltige Mischpolymerisate eingesetzt, so daß zur Zeit in den meisten Fällen chlorhaltige Erzeugnisse, entweder allein oder in Kombination mit Acrylatsystemen, für die Aluminumfolienkaschierung benutzt werden. Für die Beschichtung von Aluminium sind aus der Literatur Vinylchlorid-Vinylacetat-Vinylalkohol-Terpolymerisate (DE-OS 28 38 383 = US-A 4,141,870) und Vinylchlorid-Pfropfcopolymerisate (EP-A 117 350) bekannt. In letzter Zeit wird jedoch der Einsatz von chlorhaltigen Produkten in kurzlebigen Verpackungsmaterial, vor allem im Lebensmittelsektor, soweit möglich, vermieden. Demzufolge besteht ein dringender Bedarf an chlorfreien Polymerisaten für die Beschichtung von Aluminium, speziell für die Aluminumfolienausrüstung.

Die US-A 4661550 betrifft eine wärmehärtbare Beschichtungsmittel-Zusammensetzung aus Vinylacetat-Copolymerisat, Melaminharz und organischem Lösungsmittel. Solche wärmehärtbaren Beschichtungsmittel sind wegen des Anteils an vernetzbarem Melaminharz als Heißsiegellack bzw. Primer völlig ungeeignet, da in der Wärme extrem harte, nicht siegelbare Beschichtungen resultieren.
Die EP-A 315278 beschreibt die Herstellung von Copolymerisaten aus Vinylacetat, VeoVa 9 bzw. VeoVa 10, Acrylsäure, wobei zur Erhöhung des Monomerumsatzes (Meth)acrylate copolymerisiert werden. Es werden lediglich wäßrige Latices der genannten Copolymerisate als Bindemittel für Farben empfohlen. Die Verwendung von Vinylestercopolymer-Lösungen als Heißsiegellack für Aluminiumfolien wird nicht beschrieben. Die EP-A 516201 betrifft Copolymerisate aus Vinylpivalat, VeoVa 10, Vinylacetat und einem wasserlöslichen Comonomer, welche in Abhängigkeit von der Copolymer-Zusammensetzung variable Tg, Wasserabsorption und Wasserresistenz besitzen. Die wäßrigen Latices der Copolymerisate werden als Beschichtungsmittel empfohlen. Die Verwendung von Vinylestercopolymer-Lösungen als heißsiegelbare Beschichtung für Aluminiumfolien wird nicht beschrieben.
Die GB-A 1145564 betrifft hydroxyfunktionelle Copolymerisate von Vinylacetat und Versaticsäure-Vinylester. Diese Copos werden in Lösung zusammen mit vernetzbaren Harzen wie Alkyd-, Harnstoff-Formaldehyd-, Phenol-Formaldehyd- und Epoxidharzen zur Herstellung von in der Hitze härtbaren Beschichtungen eingesetzt. Heißsiegelbare Beschichtungen werden nicht beschrieben.

Es bestand daher die Aufgabe, eine Beschichtungsmittel-Zusammensetzung speziell für die Aluminiumfolienausrüstung zur Verfügung zu stellen, welche weder chlorhaltige Polymerisate enthält, noch mit einem chlorhaltigen Primer appliziert werden muß. Die dem Beschichtungsmittel zugrundeliegenden Polymerisate sollten daher sowohl eine gute Haftung auf Aluminium als auch für die Verwendung als Heißsiegellack eine gute Siegelnahtfestigkeit im trockenen wie im nassen Zustand aufweisen.

Gegenstand der Erfindung ist die Verwendung einer Beschichtungsmittel-Zusammensetzung auf der Basis einer Lösung von Vinylestercopolymerisat in einem organischen Lösungsmittel als Heißsiegellack oder Primerbeschichtung für Aluminiumfolien, wobei im Vinylestercopolymerisat enthalten sind
A) 20 bis 90 Gew.Teile eines Vinylesters von gesättigten, aliphatischen Monocarbonsäuren mit 1 bis 5 C-Atomen,
B) 0 bis 70 Gew.Teile eines Vinylesters von gesättigten, aliphatischen Monocarbonsäuren mit 9 bis 10 C-Atomen, welche in α-Stellung zur Carboxylgruppe ein quartäres C-Atom aufweisen,
C) 0.05 bis 10 Gew.Teile einer oder mehrerer ethylenisch ungesättigter Dicarbonsäuren mit 3 bis 10 C-Atomen oder deren Anhydride,
D) 0 bis 50 Gew.Teile einer oder mehrerer ethylenisch ungesättigter Monomeren, deren Homopolymerisate eine Glasübergangstemperatur oberhalb von 30°C aufweisen,
und die Angaben in Gew.Teilen auf 100 Gew.Teile der Comonomer-Zusammensetzung bezogen sind.

Als Komponente A) werden vorzugsweise Vinylacetat oder Vinylpropionat eingesetzt. Insbesonders besteht die Monomerkomponente A) aus Vinylacetat.

Als Komponente B) werden die Vinylversaticsäureester-Gemische der Firma Shell Chemie GmbH VeoVa 9 (= Vinylester von gesättigten, aliphatischen Monocarbonsäuren mit 9 C-Atomen, welche in α-Stellung zur Carboxylgruppe ein quartäres C-Atom aufweisen) und VeoVa 10 (Vinylester von gesättigten, aliphatischen Monocarbonsäuren mit 10 C-Atomen, welche in α-Stellung zur Carboxylgruppe ein quartäres C- Atom aufweisen) oder einzelne Bestandteile dieser Gemische bevorzugt. Insbesonders besteht die Komponente B) aus VeoVa 9.

Als Komponente C) enthält das Copolymerisat vorzugsweise, Maleinsäure, Fumarsäure, Itaconsäure, Maleinsäureanhydrid, Allylbernsteinsäureanhydrid, Mesaconsäure, Citraconsäure und/oder Citraconsäureanhydrid. Besonders bevorzugt werden Maleinsäureanhydrid und Fumarsäure.

Als Komponente D) werden bevorzugt Methylmethacrylat, tert.-Butylacrylat, N-Vinylpyrrolidon, N-Vinylcarbazol, Di- ( methylmaleat, Diisopropylmaleat, Diisopropylfumarat, Di-tert.-butylmaleat, Di-tert.-butylfumarat, 4-tert.-Butylcyclohexylacrylat eingesetzt. Besonders bevorzugt sind Diisopropylfumarat und Di-tert.-butylfumarat.

In einer bevorzugten Ausführungsform haben die Vinylestercopolymerisate eine Glasübergangstemperatur T_{g} von 20 bis 100°C, einen Blockpunkt im Bereich von 30 bis 150°C, einen K-Wert von 25 bis 120 und enthalten:
A) 25 bis 85 Gew.Teile Vinylacetat,
B) 0 bis 55 Gew.Teile VeoVa 9,
C) 0.5 bis 5 Gew.Teile eines oder mehrerer Comonomere aus der Gruppe, Maleinsäure, Fumarsäure, Itaconsäure, Maleinsäureanhydrid, Allylbernsteinsäureanhydrid, Mesaconsäure, Citraconsäure und Citraconsäureanhydrid,
D) 0 bis 40 Gew.Teile eines oder mehrerer Comonomere aus der Gruppe Methylmethacrylat, tertiär Butylacrylat, N-Vinylpyrrolidon, N-Vinylcarbazol, Dimethylmaleat, Diisopropylmaleat, Diisopropylfumarat, Di-tert.-butylmaleat, Di-tert.-butylfumarat, 4-tertiär-Butylcyclohexylacrylat.

Besonders bevorzugt sind folgende Vinylestercopolymerisate:
Vinylestercopolymerisate mit einer Glasübergangstemperatur T_{g} von 30 bis 70°C, einem Blockpunkt im Bereich von 45 bis 100°C, einem K-Wert von 30 bis 80, welche
A) 40 bis 50 Gew.Teile Vinylacetat,
B) 40 bis 50 Gew.Teile VeoVa 9 und
C) 0.5 bis 3 Gew.Teile eines oder mehrerer Comonomere aus der Gruppe, Maleinsäure, Fumarsäure, Itaconsäure, Maleinsäureanhydrid,
D) 5 bis 20 Gew.Teile eines oder mehrerer Comonomere aus der Gruppe Methylmethacrylat, tertiär Butylacrylat, N-Vinylpyrrolidon, N-Vinylcarbazol, Dimethylmaleat, Diisopropylmaleat, Diisopropylfumarat, Di-tert.-butylmaleat, Di-tert.-butylfumarat, 4-tertiär-Butylcyclohexylacrylat enthalten.
Vinylestercopolymerisate mit einer Glasübergangstemperatur T_{g} von 30 bis 70°C, einem Blockpunkt im Bereich von 45 bis 100°C, einem K-Wert von 30 bis 80, welche
A) 45 bis 55 Gew.Teile Vinylacetat,
B) 45 bis 55 Gew.Teile VeoVa 9 und
C) 0.5 bis 3 Gew.Teile eines oder mehrerer Comonomere aus der Gruppe, Maleinsäure, Fumarsäure, Itaconsäure, Maleinsäureanhydrid, enthalten.
Vinylestercopolymerisate mit einer Glasübergangstemperatur T_{g} von 30 bis 70°C, einem Blockpunkt im Bereich von 45 bis 100°C, einem K-Wert von 30 bis 80, welche
A) 60 bis 85 Gew.Teile Vinylacetat,
C) 0.5 bis 3 Gew.Teile eines oder mehrerer Comonomere aus der Gruppe, Maleinsäure, Fumarsäure, Itaconsäure, Maleinsäureanhydrid,
D) 15 bis 40 Gew.Teile eines oder mehrerer Comonomere aus der Gruppe Dimethylmaleat, Diisopropylmaleat, Diisopropylfumarat, Di-tert.-butylmaleat, Di-tert.-butylfumarat, 4-tertiär-Butylcyclohexylacrylat enthalten.

Am meisten bevorzugt werden Vinylestercopolymerisate mit einer Glasübergangstemperatur T_{g} von 30 bis 70°C, einem Blockpunkt im Bereich von 45 bis 100°C, einem K-Wert von 30 bis 80, welche
A) 60 bis 85 Gew.Teile Vinylacetat,
C) 0.5 bis 3 Gew.Teile Fumarsäure und/oder Maleinsäureanhydrid,
D) 15 bis 40 Gew.Teile eines oder mehrerer Comonomere aus der Gruppe Dimethylmaleat, Diisopropylmaleat, Diisopropylfumarat, Di-tert.-butylmaleat, Di-tert.-butylfumarat, 4-tertiär-Butylcyclohexylacrylat enthalten.

Vinylestercopolymerisate, welche A) 60 bis 85 Gew.Teile Vinylacetat, C) 0.5 bis 3 Gew.Teile Fumarsäure und/oder Maleinsäureanhydrid und D) 15 bis 40 Gew.Teile eines oder mehrerer Comonomere aus der Gruppe Dimethylmaleat, Diisopropylmaleat, Diisopropylfumarat, Di-tert.-butylmaleat, Di-tert.-butylfumarat enthalten, sind im Stand der Technik nicht bekannt.

Die Herstellung der Vinylestercopolymeriste kann durch radikalische Polymerisation in einem organischen Lösungsmittel wie zum Beispiel Essigsäureethylester, Aceton oder tert.-Butanol, in Emulsion unter Zusatz von üblichen Emulgatoren und Schutzkolloiden oder in Suspension unter Zuhilfenahme von Schutzkolloiden erfolgen. Vorzugsweise wird nach dem Suspensionspolymerisationsverfahren gearbeitet.

Als Emulgatoren für die Emulsionspolymerisation haben sich Alkylsulfate, Alkylsulfonate, ethoxylierte Alkohole sowie deren sulfatierte Produkte bewährt. Schutzkolloide, die mit Erfolg bei der Suspensionspolymerisation eingesetzt werden können, sind unter anderem Polyvinylpyrrolidon, Polyvinylalkohol, Cellulosederivate, wie Hydroxyethylcellulose, carbonsäurehaltige Vinylestercopolymere sowie auch anorganische Verteiler wie Aluminium- oder Magnesiumhydroxid.

Sowohl bei der Emulsions- als auch bei der Suspensionspolymerisation kann nach dem Vorlage- oder nach dem Zulaufverfahren gearbeitet werden, wobei der Zulauf dieselbe als auch eine von der, eventuell vorhandenen, Vorlage unterschiedliche Zusammensetzung haben kann.

Als Initiatoren für die Polymerisation können für die Emulsionspolymerisation die üblichen wasserlöslichen Radikalbildner wie Natrium-, Kalium-, Ammoniumperoxodisulfat, tert.- Butylhydroperoxid verwendet werden, für die Suspensions- und Lösungspolymerisation die üblichen organischen Peroxide und Azoverbindungen wie Dibutylperoxydicarbonat, Bis(4-tert.-butylcyclohexyl)peroxydicarbonat, Bis(2-ethylhexyl)peroxydicarbonat, Dicetylperoxydicarbonat, tert.-Butylperoxypivalat, Dilaurylperoxid, Dibenzoylperoxid, Dicumylperoxid, tert.-Butylperoxy-2-ethylhexanoat, 2,2-Bis(tert.-butylperoxy)butan, tert.-Butylhydroperoxid, Dicyclohexylperoxidicarbonat, 2,2'-Azoisobutyronitril.

Es kann ein Initiator allein oder eine Mischung verschiedener Initiatoren zur Polymerisation benutzt werden. Bei der Suspensionspolymerisation hat es sich als sinnvoll erwiesen mit einer Kombination von Initiatoren mit unterschiedlichen Zersetzungstemperaturen (unterschiedliche Halbwertzeiten bei der vorgegebenen Polymerisationstemperatur) zu arbeiten, da so eine raschere und kontinuierlichere Polymerisationsreaktion erreicht wird. Während bei der Suspensionspolymerisation der oder die Initiatoren in der Regel mit vorgelegt werden, da die verwendeten organischen Initiatoren nur schwer über die Wasserphase in die Perlen diffundieren, so ist es bei der Emulsionspolymerisation und der Polymerisation in einem organischen Lösungsmittel im allgemeinen sinnvoller nur einen Teil des oder der Initiatoren vorzulegen und den Rest im Laufe der Reaktion zuzudosieren. Außerdem ist es oft von Vorteil zusätzlich zu den Initiatoren noch reduzierende Verbindungen wie Bisulfit, Dithionit, Rongallit, tert.-aromatische Amine, oder Ascorbinsäure zuzugeben. Die Initiatoren werden in der Regel in Mengen zwischen 0.01 - 1.0 Gew.% bezogen auf die Summe der Monomeren eingesetzt. Die Polymerisationstemperatur beträgt, je nachdem ob mit einem rein thermischen oder mit einem Redoxsystem gearwird, zwischen 30 und 95°C. Gegen Ende der Polymerisation wird die Temperatur zur Vervollständigung der Reaktion im allgemeinen auf eine höhere Temperatur als die Anfangspolymerisationstemperatur gestellt.

Die Isolierung der Vinylestercopolymerisate erfolgt in üblicher Art und Weise. Bei den Suspensionspolymerisaten durch Absaugen und Waschen mit Wasser und anschließendem Trocknen. Wird die Polymerisation in einem organischen Lösungsmittel durchgeführt, so kann das Copolymerisat durch Ausfällen in einem Fällungsmittel wie beispielsweise Methanol oder Petroleumbenzin isoliert werden, wobei das Volumenverhältnis von Fällungsmittel zur Lösung mindestens 5 : 1 betragen sollte. Das Polymerisat kann auch durch Abdestillieren des Lösungsmittels isoliert werden. Die Emulsionspolymerisate können durch Gießen eines Filmes oder durch Koagulation der Emulsion mittels mehrwertiger Metallsalze oder Ausfrieren isoliert werden.

Zur Formulierung der erfindinngsgemäßen Heißsiegellack-Zusammensetzungen werden die Vinylestercopolymerisate in einem organischen Lösungsmittel gelöst. Geeignete Lösungsmittel sind Carbonsäureester wie Essigsäureethylester; Ketone wie Aceton, Methylethylketon; Alkohole wie Ethanol, Propanol, Butanol; Ether wie Tetrahydrofuran, chlorierte Kohlenwasserstoffe wie Methylenchlorid, Chloroform. Vorzugsweise wird als Lösungsmittel Aceton oder Essigsäureethylester verwendet. Der Festgehalt der Lösungen liegt im Bereich von 10 bis 70, vorzugsweise 20 bis 40 Gew.%.

Zur Beschichtung beispielsweise von Aluminiumfolien wird die erfindungsgemäße Beschichtungsmittel-Zusammensetzung beispielsweise durch Sprühen, Tauchen, Streichen, Gießen, Rakeln oder auf andere geeignete Art und Weise aufgetragen. Die Auftragungsmenge wird dabei üblicherweise so bemessen, daß nach dem Trocknen eine Schicht von 5 bis 50 µm resultiert. Das beschichtete Substrat wird schließlich bei erhöhter Temperatur, gegebenenfalls bei reduziertem Druck, getrocknet.

Die erfindungsgemäßen Beschichtungsmittel auf der Basis von Vinylestercopolymerisaten eignen sich vor allem zur Heißsiegellackierung von Aluminium und als Primer für die Heißsiegellackierung. Sie zeigen selbst auf unbehandelter Aluminiumfolie eine gute Haftung. Die Lackschicht ist transparent und weist bei Raumtemperatur eine hohe Flexibilität auf. Die Siegelnahtfestigkeiten der Polymerisate hängt dabei überraschenderweise von der Herstellungsmethode ab: Sie ist für die nach dem Suspensionspolymerisationsverfahren hergestellten Polymeren generell am höchsten und für die in einem organischen Lösungsmittel synthetisierten Produkte am niedrigsten.

Die nachfolgenden Beispiele dienen zur weiteren Erläuterung der Erfindung. Gegenstand der Beispiele ist die Herstellung der den erfindungsgemäßen Zusammensetzungen zugrundeliegenden Vinylestercopolymerisate und die Bereitung der Beschichtungsmittel-Lösungen. Die in den Beispielen hergestellten Heißsiegellack-Zusammensetzungen wurden mit den nachfolgend angegebenen Methoden einer anwendungstechnischen Prüfung unterzogen, deren Ergebnisse in Tabelle 1 aufgeführt sind.

### Beispiel 1:

In einem Polymerisationsgefäß mit Ankerrührer, Rückflußkühler und Stickstoffspülung wurden 42 Teile Vinylacetat, 42 Teile VeoVa 9, 15 Teile tert.-Butylacrylat, 1 Teil Maleinsäureanhydrid, 0.1 Teile Bis(2-ethylhexylperoxo)dicarbonat, 0.1 Teile tert.-Butylperoxypivalat und 0.05 Teile Dibenzoylperoxid vorgelegt und mit Essigsäureethylester soweit verdaß eine 40 %ige Lösung entstand. Anschließend wurde unter kräftiger Stickstoffspülung aufgeheizt und für 12 Stunden unter Rückfluß gehalten. Daraufhin wurde für 2 Stunden ein Wasserstrahlvakuum angelegt und auf Raumtemperatur abgekühlt. Der Feststoffgehalt betrug 65 % und wurde mit Essigsäureethylester auf 20 % eingestellt.

### Beispiel 2:

In einem Polymerisationsgefäß mit Ankerrührer, Rückflußkühler, Stickstoffspülung und Dosiereinrichtung wurden 6 Teile Vinylacetat, 6 Teile VeoVa 9, 12.5 Teile tert.-Butylacrylat, 1 Teil Maleinsäureanhydrid, 1.5 Teile Polyvinylalkohol (Verseifungszahl 140, Höppler Viskosität einer 4%igen Lösung 5), 1 Teil Genapol X 360 (Emulgator der Firma Hoechst), 0.2 Teile Natriumhydrogencarbonat und 99 Teile Wasser vorgelegt. Während des Aufheizens auf 70°C wurde intensiv mit Stickstoff gespült. Nach dem Erreichen der angegebenen Temperatur wurden 0.1 Teile Kaliumperoxodisulfat in 6 Teilen Wasser zugegeben. Nach dem Anspringen der Reaktion wurden die folgenden drei Dosierungen über einen Zeitraum von 2 Stunden zugegeben. Dosierung 1 : 0.2 Teile Kaliumperoxodisulfat in 12 Teilen Wasser. Dosierung 2 : 36.5 Teile tert.-Butylacrylat, 19 Teile VeoVa 9 und 19 Teile Vinylacetat. Dosierung 3 : 0.4 Teile Natriumhydrogencarbonat, 3 Teile Genapol X 360 in 18 Teilen Wasser. Nach einer Reaktionszeit von 5 Stunden wurde die Innentemperatur auf 80°C gesteigert und ein Wasserstrahlvakuum für 1 Stunde angelegt. Nach dem Abkühlen auf Raumtemperatur resultierte eine einwandfreie Dispersion mit einem Feststoffgehalt von 40 %. Die Dispersion wurde bei -18°C koaguliert, das Koagulat abfiltriert, mit viel Wasser gewaschen, getrocknet und aus dem Festharz eine 20 %ige Lösung in Essigsäureethylester hergestellt.

### Beispiel 3:

In einem Polymerisationsgefäß mit Paddelrührer, Rückflußkühler und Stickstoffspülung wurden 49 Teile Vinylacetat, 50 Teile VeoVa 9, 1 Teil Maleinsäure, 0.05 Teile tert.-Butylperoxypivalat und 5 Teile Polyvinylpyrrolidon K 30 ( Produkt der Firma GAF ) vorgelegt und unter Rühren soviel Wasser zugegeben, daß der Gehalt an Monomeren 35 Gewichtsprozent betrug. Unter starker Stickstoffspülung wurde auf 70°C aufgeheizt. Nach 6 Stunden Reaktionszeit wurde ein Wasserstrahlvakuum für eine Stunde angelegt. Nach dem Abkühlen auf Raumtemperatur wurden die erhaltenen Perlen abgesaugt und mit viel Wasser gewaschen. Aus dem trockenen Polymerisat wurde eine 20 %ige Lösung in Essigsäureethylester hergestellt.

### Beispiel 4:

In einem Polymerisationsgefäß mit Paddelrührer, Rückflußkühler und Stickstoffspülung wurden 49 Teile Vinylacetat, 50 Teile VeoVa 9, 1 Teil Itaconsäure, 0.05 Teile tert.-Butylperoxypivalat und 5 Teile Polyvinylpyrrolidon K 30 ( Produkt der Firma GAF ) vorgelegt und unter Rühren soviel Wasser zugegeben, daß der Gehalt an Monomeren 35 Gewichtsprozent betrug. Unter starker Stickstoffspülung wurde auf 70°C aufgeheizt. Nach 6 Stunden Reaktionszeit wurde ein Wasserstrahlvakuum für eine Stunde angelegt. Nach dem Abkühlen auf Raumtemperatur wurden die erhaltenen Perlen abgesaugt und mit viel Wasser gewaschen. Aus dem trockenen Polymerisat wurde eine 20 %ige Lösung in Essigsäureethylester hergestellt.

### Beispiel 5:

In einem Polymerisationsgefäß mit Paddelrührer, Rückflußkühler und Stickstoffspülung wurden 49 Teile Vinylacetat, 50 Teile VeoVa 9, 1 Teil Maleinsäureanhydrid, 0.05 Teile tert.-Butylperoxypivalat und 5 Teile Polyvinylpyrrolidon K 30 (Produkt der Firma GAF) vorgelegt und unter Rühren soviel Wasser zugegeben, daß der Gehalt an Monomeren 35 Gewichtsprozent betrug. Unter starker Stickstoffspülung wurde auf 70°C aufgeheizt. Nach 6 Stunden Reaktionszeit wurde ein Wasserstrahlvakuum für eine Stunde angelegt. Nach dem Abkühlen auf Raumtemperatur wurden die erhaltenen Perlen abgesaugt und mit viel Wasser gewaschen. Aus dem trockenen Polymerisat wurde eine 20 %ige Lösung in Essigsäureethylester hergestellt.

### Beispiel 6:

In einem Polymerisationsgefäß mit Paddelrührer, Rückflußkühler, Dosiervorrichtung und Stickstoffspülung wurden 139 Teile Wasser und 2 Teile Polyvinylpyrrolidon K 90 als 5 %ige Lösung in Wasser, (ein Produkt der Firma GAF) vorgelegt und unter Stickstoffspülung auf 70 °C aufgeheizt. Nach Erreichen der Temperatur wurden unter starker Rührung und Stickstoffspülung die folgenden Dosierungen eingefahren: Dosierung 1 : ein Gemisch aus 49 Teilen Vinylacetat, 50 Teilen VeoVa 9, 1 Teil Allylbernsteinsäureanhydrid, 0.1 Teilen tert-Butylperoxypivalat, 0.05 Teilen Dibenzoylperoxid. Dosierung 2: 6 Teile Wasser und 0.1 Teile Bis(2-ethylhexylperoxo)dicarbonat. Nach 3 Stunden Reaktionszeit wurde die Temperatur auf 83°C erhöht und nach weiteren zwei Stunden Reaktionszeit ein Wasserstrahlvakuum für eine Stunde angelegt. Nach dem Abkühlen auf Raumtemperatur wurden die erhaltenen Perlen abgesaugt und mit viel Wasser gewaschen. Aus dem trockenen Polymerisat wurde eine 20 %ige Lösung in Essigsäureethylester hergestellt.

### Beispiel 7:

In einem Polymerisationsgefäß mit Paddelrührer, Rückflußkühler, Dosiervorrichtung und Stickstoffspülung wurden 139 Teile Wasser und 2 Teile Polyvinylpyrrolidon K 90 als 5 %ige Lösung in Wasser (ein Produkt der Firma GAF) vorgelegt und unter Stickstoffspülung auf 70°C aufgeheizt. Nach Erreichen der Temperatur wurden unter starker Rührung und Stickstoffspülung die folgenden Dosierungen rasch eingefahren: Dosierung 1 : ein Gemisch aus 49 Teilen Vinylacetat, 49 Teilen VeoVa 9, 2 Teilen Mesaconsäure, 0.1 Teilen tert.-Butylperoxypivalat, 0.05 Teilen Dibenzoylperoxid. Dosierung 2: 6 Teile Wasser und 0.1 Teile Bis(2-Ethylhexyl)peroxodicarbonat. Nach 4 Stunden Reaktionszeit wurde die Temperatur auf 80°C erhöht und nach weiteren zwei Stunden Reaktionszeit ein Wasserstrahlvakuum für eine Stunde angelegt. Nach dem Abkühlen auf Raumtemperatur wurden die erhaltenen Perlen abgesaugt und mit viel Wasser gewaschen. Aus dem trockenen Polymerisat wurde eine 20 %ige Lösung in Essigsäureethylester hergestellt.

### Beispiel 8:

In einem Polymerisationsgefäß mit Paddelrührer, Rückfluß-kühler, Dosiervorrichtung und Stickstoffspülung wurden 139 Teile Wasser und 2 Teile Polyvinylpyrrolidon K 90 in einer 5 %ige Lösung in Wasser (ein Produkt der Firma GAF) vorgelegt und unter Stickstoffspülung auf 70°C aufgeheizt. Nach Erreichen der Temperatur wurden unter starker Rührung und Stickstoffspülung die folgenden Dosierungen rasch eingefahren: Dosierung 1 : ein Gemisch aus 49 Teilen Vinylacetat, 50 Teilen VeoVa 9, 1 Teil Citraconsäure, 0.1 Teilen tert.-Butylperoxypivalat, 0.05 Teilen Dibenzoylperoxid. Dosierung 2: 6 Teile Wasser und 0.1 Teile Bis(2-Ethylhexyl)peroxodicarbonat. Nach 4 Stunden Reaktionszeit wurde die Temperatur auf 80°C erhöht und nach weiteren zwei Stunden Reaktionszeit ein Wasserstrahlvakuum für eine Stunde angelegt. Nach dem Abkühlen auf Raumtemperatur wurden die erhaltenen Perlen abgesaugt und mit viel Wasser gewaschen. Aus dem trockenen Polymerisat wurde eine 20 %ige Lösung in Essigsäureethylester hergestellt.

### Beispiel 9:

In einem Polymerisationsgefäß mit Paddelrührer, Rückflußkühler, Dosiervorrichtung und Stickstoffspülung wurden 139 Teile Wasser und 2 Teile Polyvinylpyrrolidon K 90 als 5 %ige Lösung in Wasser (ein Produkt der Firma GAF) vorgelegt und unter Stickstoffspülung auf 70°C aufgeheizt. Nach Erreichen der Temperatur wurden unter starker Rührung und Stickstoffspülung die folgenden Dosierungen rasch eingefahren: Dosierung 1 : ein Gemisch aus 49 Teilen Vinylacetat, 50 Teile VeoVa 9, 1 Teil Citraconsäureanhydrid, 0.1 Teilen tert-Butylperoxypivalat, 0.05 Teilen Dibenzoylperoxid. Dosierung 2: 6 Teile Wasser und 0.1 Teilen Bis(2-Ethylhexyl)peroxodicarbonat. Nach 4 Stunden Reaktionszeit wurde die Temperatur auf 80°C erhöht und nach weiteren zwei Stunden Reaktionszeit ein Wasserstrahlvakuum für eine Stunde angelegt. Nach dem Abkühlen auf Raumtemperatur wurden die erhaltenen Perlen abgesaugt und mit viel Wasser gewaschen. Aus dem trockenen Polymerisat wurde eine 20 %ige Lösung in Essigsäureethylester hergestellt.

### Beispiel 10:

In einem Polymerisationsgefäß mit Paddelrührer, Rückflußkühler und Stickstoffspülung wurden 49 Teile Vinylacetat, 50 Teile VeoVa 9, 1 Teil Maleinsäureanhydrid, 0.1 Teile Bis(2-ethylhexylperoxo)dicarbonat, 0.1 Teile tert.-Butylperoxypivalat und 0.3 Teile Dibenzoylperoxid vorgelegt und mit Essigsäureethylester soweit verdünnt, daß eine 40 %ige Lösung entstand. Anschließend wurde unter kräftiger Stickstoffspülung aufgeheizt und für 20 Stunden unter Rückfluß gehalten. Daraufhin wurde für 2 Stunden ein Wasserstrahlvakuum angelegt und auf Raumtemperatur abgekühlt. Der Feststoffgehalt wurde mit Essigsäureethylester auf 20 % eingestellt.

### Beispiel 11:

In einem Polymerisationsgefäß mit Ankerrührer, Rückflußkühler, Dosiervorrichtung und Stickstoffspülung wurden 49 Teile Vinylacetat, 50 Teile VeoVa 9, 1 Teil Crotonsäure und 0.02 Teile tert.-Butylperoxypivalat vorgelegt und mit Essigsäureethylester soweit verdünnt, daß eine 60 %ige Lösung entstand. Anschließend wurde unter kräftiger Stickstoffspülung auf 70°C aufgeheizt. Nach dem Anspringen der exothermen Reaktion wurden über 2 Stunden 0.03 Teile tert.-Butylperoxopivalat in 10 Teilen Essigsäureethylester zugegeben. Nach 4 Stunden Reaktionszeit wurde bei 70°C für eine Stunde ein Wasserstrahlvakuum angelegt. Nach dem Abkühlen auf Raumtemperatur wurde die Polymerlösung in der 10-fachen Menge an Petrolether ausgefällt, abgesaugt, getrocknet und aus dem Polymerisat eine 20 %ige Lösung in Essigsäureethylester hergestellt.

### Beispiel 12:

In einem Polymerisationsgefäß mit Paddelrührer, Rückflußkühler und Stickstoffspülung wurden 44 Teile Vinylacetat, 45 Teile VeoVa 9, 1 Teil Maleinsäureanhydrid, 10 Teile tert.-Butylacrylat, 0.05 Teile Bis(2-ethylhexylperoxo)dicarbonat, 0.05 Teile tert.-Butylperoxypivalat, 0,025 Teile Dibenzoylperoxid und 2 Teile Polyvinylpyrrolidon K 90, als 5%ige wässrige Lösung, (Produkt der Firma GAF) vorgelegt und unter Rühren soviel Wasser zugegeben, daß der Gehalt an Monomeren 35 Gewichtsprozent betrug. Unter starker Stickstoffspülung wurde auf 70°C aufgeheizt. Nach 6 Stunden Reaktionszeit wurde ein Wasserstrahlvakuum für eine Stunde bei einer Temperatur von 80°C angelegt. Nach dem Abkühlen auf Raumtemperatur wurden die erhaltenen Perlen abgesaugt und mit viel Wasser gewaschen. Aus dem trockenen Polymerisat wurde eine 20 %ige Lösung in Essigsäureethylester hergestellt.

### Beispiel 13:

In einem Polymerisationsgefäß mit Paddelrührer, Rückflußkühler, Dosiervorrichtung und Stickstoffspülung wurden 176 Teile Wasser und 0.5 Teile Eballoid gelöst in 8.6 Teilen Wasser (Eballoid ist ein carboxylgruppenhaltiger Polyvinylester, ein Produkt der Wacker Chemie GmbH) vorgelegt und unter Stickstoffspülung auf 70°C aufgeheizt. Nach Erreichen der Temperatur wurden unter starker Rührung und Stickstoffspülung die folgenden Dosierungen rasch eingefahren: Dosierung 1 : ein Gemisch aus 44 Teilen Vinylacetat, 49 Teilen VeoVa 9, 1 Teil Maleinsäureanhydrid, 10 Teilen N-Vinylpyrrolidon, 0.05 Teilen tert.-Butylperoxypivalat, 0.025 Teilen Dibenzoylperoxid. Dosierung 2: 6 Teile Wasser und 0.05 Teile Bis(2-ethylhexyl)peroxodicarbonat. Nach 4 Stunden Reaktionszeit wurde die Temperatur auf 80°C erhöht und nach einer Stunde Reaktionszeit ein Wasserstrahlvakuum für eine halbe Stunde angelegt. Nach dem Abkühlen auf Raumtemperatur wurden die erhaltenen Perlen abgesaugt und mit viel Wasser gewaschen. Aus dem trockenen Polymerisat wurde eine 20 %ige Lösung in Essigsäureethylester hergestellt.

### Beispiel 14:

In einem Polymerisationsgefäß mit Paddelrührer, Rückflußkühler, Dosiervorrichtung und Stickstoffspülung wurden 96.9 Teile Wasser und 2 Teile Tylose H 4000 (ein Produkt der Firma Hoechst) vorgelegt und unter Stickstoffspülung auf 70°C aufgeheizt. Nachdem sich die Tylose gelöst hat, wurden unter starker Rührung und Stickstoffspülung die folgenden Dosierungen rasch eingefahren: Dosierung 1 : ein Gemisch aus 42 Teilen Vinylacetat, 42 Teilen VeoVa 9, 1 Teil Maleinsäureanhydrid, 15 Teilen tert.-Butylacrylat, 0.1 Teilen tert.-Butylperoxypivalat, 0.05 Teilen Dibenzoylperoxid. Dosierung 2: 6 Teile Wasser und 0.1 Teile Bis(2-ethylhexyl)peroxodicarbonat. Nach 2 Stunden Reaktionszeit wurde die Temperatur auf 80°C erhöht und nach einer Stunde Reaktionszeit ein Wasserstrahlvakuum für eine halbe Stunde angelegt. Nach dem Abkühlen auf Raumtemperatur wurden die erhaltenen Perlen abgesaugt und mit viel Wasser gewaschen. Aus dem trockenen Polymerisat wurde eine 20 %ige Lösung in Essigsäureethylester hergestellt.

### Beispiel 15:

In einem Polymerisationsgefäß mit Paddelrührer, Rückflußkühler, Dosiervorrichtung und Stickstoffspülung wurden 146 Teile Wasser und 2 Teile Polyvinylpyrrolidon K 90, als 5%ige Lösung in Wasser (ein Produkt der Firma GAF) vorgelegt und unter Stickstoffspülung auf 70°C aufgeheizt. Nach dem Erreichen der Temperatur wurden unter starker Rührung und Stickstoffspülung die folgenden Dosierungen rasch eingefahren: Dosierung 1 : ein Gemisch aus 49 Teilen Vinylacetat, 50 Teilen VeoVa 9, 1 Teil Maleinsäureanhydrid, 0.05 Teilen tert.-Butylperoxypivalat, 0.025 Teilen Dibenzoylperoxid. Dosierung 2: 6 Teile Wasser und 0.05 Teile Bis(2-ethylhexyl)peroxodi-carbonat. Nach 6 Stunden Reaktionszeit wurde die Temperatur auf 80°C erhöht und nach einer Stunde Reaktionszeit ein wasserstrahlvakuum für eine halbe Stunde angelegt. Nach dem Abkühlen auf Raumtemperatur wurden die erhaltenen Perlen abgesaugt und mit viel Wasser gewaschen. Aus dem trockenen Polymerisat wurde eine 20 %ige Lösung in Essigsäureethylester hergestellt.

### Beispiel 16:

In einem Polymerisationsgefäß mit Ankerrührer, Rückflußkühler, Dosiervorrichtung und Stickstoffspülung wurden 149 Teile Wasser vorgelegt und unter Stickstoffspülung auf 70°C aufgeheizt. Nach dem Erreichen der Temperatur wurden unter starker Rührung und Stickstoffspülung die folgenden Dosierungen rasch eingefahren: Dosierung 1 : ein Gemisch aus 49 Teilen Vinylacetat, 50 Teilen VeoVa 9, 1 Teil Maleinsäureanhydrid, 0.05 Teilen tert.-Butylperoxypivalat, 0.025 Teilen Dibenzoylperoxid. Dosierung 2: 6 Teile Wasser und 0.05 Teile Bis(2-ethylhexyl)peroxodicarbonat. 35 Minuten nach dem Anspringen der exothermen Reaktion wurden schnell 2 Teile Eballoid, als 5.5 %ige wässrige Lösung, zugegeben. Nach 6 Stunden Reaktionszeit wurde die Temperatur auf 80°C erhöht und nach einer weiteren Stunde ein Wasserstrahlvakuum für eine halbe Stunde angelegt. Nach dem Abkühlen auf Raumtemperatur wurden die erhaltenen Perlen abgesaugt und mit viel Wasser gewaschen. Aus dem trockenen Polymerisat wurde eine 20 %ige Lösung in Essigsäureethylester hergestellt.

### Beispiel 17:

In einem Polymerisationsgefäß mit Paddelrührer, Rückflußkühler, Dosiervorrichtung und Stickstoffspülung wurden 142 Teile Wasser und 2 Teile Polyvinylpyrrolidon K 90, als 5 %ige wässrige Lösung mit 2 % Kupferacetat, vorgelegt und unter Stickstoffspülung auf 70°C aufgeheizt. Nach dem Erreichen der Temperatur wurden unter starker Rührung und Stickstoffspülung die folgenden Dosierungen rasch eingefahren: Dosierung 1 : ein Gemisch aus 49 Teilen Vinylacetat, 50 Teilen VeoVa 9, 1 Teil Maleinsäureanhydrid, 0.1 Teilen tert.-Butylperoxypivalat, 0.05 Teilen Dibenzoylperoxid. Dosierung 2: 6 Teile Wasser und 0.1 Teile Bis(2-ethylhexyl)peroxodicarbonat. Nach 6 Stunden Reaktionszeit wurde die Temperatur auf 80°C erhöht und nach einer weiteren Stunde ein Wasserstrahlvakuum für eine halbe Stunde angelegt. Nach dem Abkühlen auf Raumtemperatur wurden die erhaltenen Perlen abgesaugt und mit viel Wasser gewaschen. Aus dem trockenen Polymerisat wurde eine 20 %ige Lösung in Essigsäureethylester hergestellt.

### Beispiel 18:

In einem Polymerisationsgefäß mit Paddelrührer, Rückflußkühler, Dosiervorrichtung und Stickstoffspülung wurden 189 Teile Wasser und 2 Teile Polyvinylpyrrolidon K 90, als 5% ige wässrige Lösung, vorgelegt und unter Stickstoffspülung auf 70°C aufgeheizt. Nach dem Erreichen der Temperatur wurden unter starker Rührung und Stickstoffspülung die folgenden Dosierungen rasch eingefahren: Dosierung 1 : ein Gemisch aus 65 Teilen Vinylacetat, 34 Teilen Dimethylmaleat, 1 Teil Maleinsäureanhydrid, 0.1 Teilen tert.-Butylperoxypivalat, 0.15 Teilen Dibenzoylperoxid. Dosierung 2: 6 Teile Wasser und 0.1 Teile Bis(2-ethylhexyl)peroxodicarbonat. Nach 6 Stunden Reaktionszeit wurde die Temperatur auf 80°C erhöht und nach einer weiteren Stunde ein Wasserstrahlvakuum für eine halbe Stunde angelegt. Nach dem Abkühlen auf Raumtemperatur wurden die erhaltenen Perlen abgesaugt und mit viel Wasser gewaschen. Aus dem trockenen Polymerisat wurde eine 20 %ige Lösung in Essigsäureethylester hergestellt.

### Beispiel 19:

In einem Polymerisationsgefäß mit Paddelrührer, Rückflußkühler, Dosiervorrichtung und Stickstoffspülung wurden 189 Teile Wasser und 2 Teile Polyvinylpyrrolidon K 90, als 5 %ige wässrige Lösung, vorgelegt und unter Stickstoffspülung auf 70°C aufgeheizt. Nach dem Erreichen der Temperatur wurden unter starker Rührung und Stickstoffspülung die folgenden Dosierungen rasch eingefahren: Dosierung 1 : ein Gemisch aus 69 Teilen Vinylacetat, 30 Teilen Diisopropylfumarat, 1 Teil Maleinsäureanhydrid, 0.1 Teilen tert.-Butylperoxypivalat, 0.15 Teilen Dibenzoylperoxid. Dosierung 2: 6 Teile Wasser und 0.1 Teile Bis(2-ethylhexyl)peroxodicarbonat. Nach 6 Stunden Reaktionszeit wurde die Temperatur auf 80°C erhöht und nach einer weiteren Stunde ein Wasserstrahlvakuum für eine halbe Stunde angelegt. Nach dem Abkühlen auf Raumtemperatur wurden die erhaltenen Perlen abgesaugt und mit viel Wasser gewaschen. Aus dem trockenen Polymerisat wurde eine 20 %ige Lösung in Essigsäureethylester hergestellt.

### Beispiel 20:

In einem Polymerisationsgefäß mit Paddelrührer, Rückflußkühler, Dosiervorrichtung und Stickstoffspülung wurden 189 Teile Wasser und 2 Teile Polyvinylpyrrolidon K 90, als 5 %ige wässrige Lösung, vorgelegt und unter Stickstoffspülung auf 70°C aufgeheizt. Nach dem Erreichen der Temperatur wurden unter starker Rührung und Stickstoffspülung die folgenden Dosierungen rasch eingefahren: Dosierung 1 : ein Gemisch aus 65 Teilen Vinylacetat, 34 Teilen 4-tert.-Butylcyclohexylacrylat, 1 Teil Maleinsäureanhydrid, 0.1 Teilen tert.-Butylperoxypivalat, 0.15 Teilen Dibenzoylperoxid. Dosierung 2: 6 Teile Wasser und 0.1 Teile Bis(2-ethylhexyl)peroxodicarbonat. Nach 6 Stunden Reaktionszeit wurde die Temperatur auf 80°C erhöht und nach einer weiteren Stunde ein Wasserstrahlvakuum für eine halbe Stunde angelegt. Nach dem Ab-kühlen auf Raumtemperatur wurden die erhaltenen Perlen abgesaugt und mit viel Wasser gewaschen. Aus dem trockenen Polymerisat wurde eine 20 %ige Lösung in Essigsäureethylester hergestellt.

### Anwendungstechnische Prüfung:

Die Vinylestercopolymerisate aus den Beispielen 1 bis 20 und deren Filme auf Aluminiumfolie wurden nach den unten aufgeführten Methoden geprüft:

### Bestimmung des K-Wertes:

Die K-Werte wurden nach H. Fikentscher, Cellulosechemie 13, 58-64 (1932), in Tetrahydrofuran bestimmmt.

### Bestimmung der Glasübergangstemperaturen T_{g}:

Die Glasübergangstemperaturen wurden mittels DSC-Messungen mit einem Gerät der Firma Perkin Elmer bestimmt, wobei der Mittelpunkt der Glasstufe als Glasübergangstemperatur angenommen wurde und die Heizrate jeweils 20°C/Minute betrug.

### Bestimmung des Weißanlaufs:

Zur Prüfung des Weißanlaufs wurde eine Glasplatte mit einem 250 µm Naßfilm (Festgehalt der Lösung 20 %) beschichtet und 20 Minuten bei 120°C getrocknet. Anschließend erfolgte eine Lagerung in Wasser für 5 Stunden. Der Weißanlauf wurde visuell suell nach folgender Bewertungsskala bestimmt:
1 = Der Film zeigt keinen Weißanlauf.
2 = Der Film zeigt einen leichten weißen Schleier.
3 = Der Film ist leicht weiß.
4 = Der Film ist weiß.

### Bestimmung der Haftfestigkeit auf der Aluminiumfolie:

Zur Prüfung der Haftung des Polymerfilmes auf einer Aluminiumfolie wurde die Folie zunächst mit Ethanol gereinigt und anschließend mit einem 50 µm Naßfilm (20 %) beschichtet und 20 Minuten bei 120°C getrocknet. Auf diesen Polymerfilm wurde ein Tesafilmstreifen mit kräftigem Fingerdruck aufgeklebt. Der Klebstreifen wurde einmal sofort wieder abgerissen; die zweite Prüfung erfolgte, nachdem die beschichtete Aluminiumfolie für 24 Stunden bei Raumtemperatur in Wasser gelagert wurde. Anschließend wurde mit einem Tuch trocken gewischt der Tesastreifen mit kräftigem Fingerdruck aufgeklebt und sofort wieder abgerissen. Die dritte Prüfung erfolgte nach 24-stündiger Wasser lagerung und anschließender 24-stündiger Lagerung bei Raumtemperatur der beschichteten Aluminiumfolie. Danach wurde der Klebestreifen mit kräftigem Fingerdruck fixiert und sofort wieder abgerissen. Die Beurteilung der Haftfestigkeit erfolgte visuell nach folgender Bewertungsskala:
- 1 =: Gute Haftung des Polymerfilmes, es wurde keinerlei Abriß der Beschichtung beobachtet.
- 2 =: Vereinzelte Stellen des Polymerfilmes wurden abgetrennt.
- 3 =: Mehrere Stellen des Polymerfilmes wurden abgetrennt.
- 4 =: Der Polymerfilm zeigt keine Haftung auf der Alufolie, die Beschichtung wurde vollständig abgelöst.

### Bestimmung des Blockpunktes:

Zur Ermittlung des Blockpunktes wurde die Aluminiumfolie mit einem 50 µm Naßfilm (20 %ig) beschichtet und für 20 Minuten bei 120°C getrocknet. Daraufhin wurde die Aluminiumfolie so gefaltet, daß die beschichteten Flächen aufeinanderlagen. In einem Siegelgerät wurde bei verschiedenden Temperaturen geprüft, ob die Polymerfilme verkleben, dabei war die Siegelzeit 30 Sekunden und der Pressdruck betrug 2,5 Kp/cm². Die Temperatur in °C, bei der sich die Aluminiumfolie nicht mehr ohne Kraftaufwand trennen läßt, der Polymerfilm also klebrig wurde, wurde als Blockpunkt oder Blocktemperatur angegeben.

### Bestimmung der Siegelnahtfestigkeit (SNF):

Die Siegelnahtfestigkeit wurde nach der folgenden Methode bestimmt: Eine mit einem 50 µm Naßfilm (20 %ig) beschichtete und bei 120°C für 20 Minuten getrocknete Aluminumumfolie wurde zusammengefaltet, so daß die mit dem Polymeren beschichteten Seiten aufeinanderlagen. Die Folie wurde mit einem Siegelgerät versiegelt, bei einer Temperatur von 190°C, für 0,5 Sekunden mit einem Pressdruck von 10 Kp/cm². Die Siegelfläche betrug 4 x 1 cm. Anschließend wurde an einem Gerät der Firma Instron die Kraft gemessen, die nötig ist bei Raumtemperatur die Aluminiumfolie wieder auseinanderzuschälen. Die Messung wurde sowohl im trockenen als auch im nassen Zustand durchgeführt. Für die Bestimmung der SNF im nassen Zustand wurde die beschichtete und versiegelte Aluminiumfolie zunächst 24 Stunden bei Raumtemperatur in Wasser gelagert und danach sofort, wie oben beschrieben, untersucht.

### Zur Tabelle 1:

### Aluhaftung:

1. Wert = Haftung trocken;
2. Wert = Haftung nach 24 h Wasserlagerung bei Raumtemperatur;
3. Wert = Haftung nach 24 h Wasserlagerung und 24 h Lagerung bei Raumtemperatur

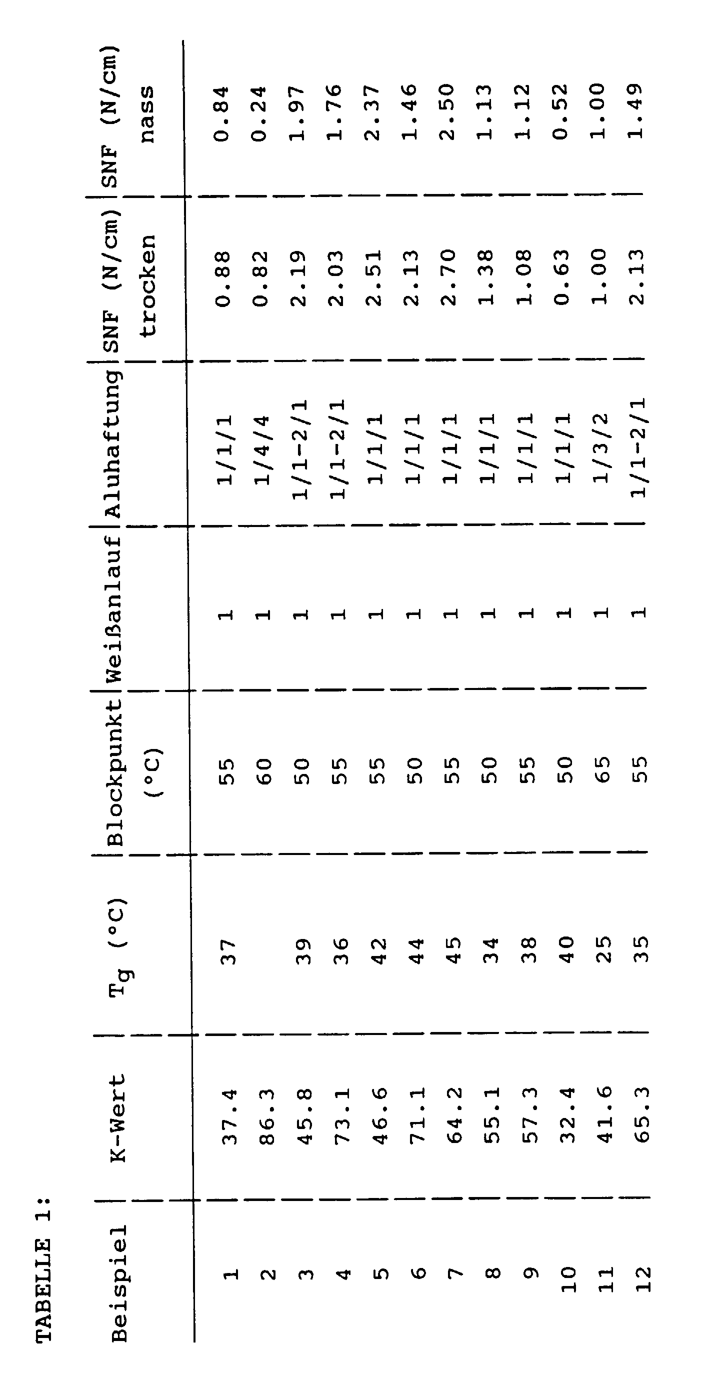

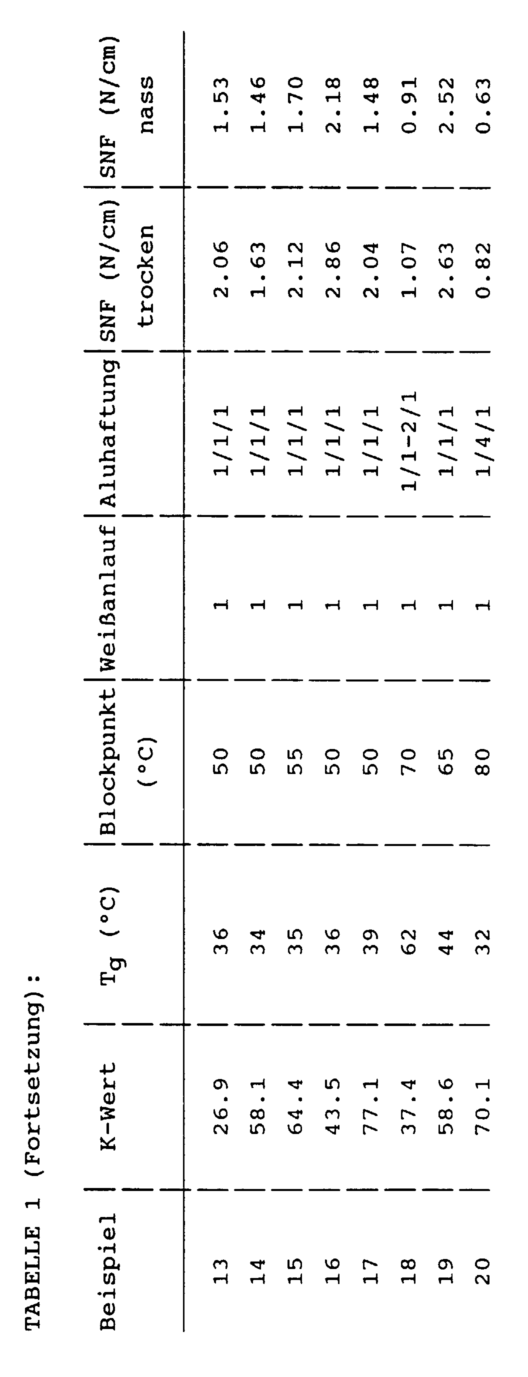

## Patentansprüche

1. Verwendung einer Beschichtungsmittel-Zusammensetzung auf der Basis einer Lösung von Vinylestercopolymerisat in einem organischen Lösungsmittel als Heißsiegellack oder Primerbeschichtung für Aluminiumfolien, wobei im Vinylestercopolymerisat enthalten sind
A) 20 bis 90 Gew.Teile eines Vinylesters von gesättigten, aliphatischen Monocarbonsäuren mit 1 bis 5 C-Atomen,
B) 0 bis 70 Gew.Teile eines Vinylesters von gesättigten, aliphatischen Monocarbonsäuren mit 9 bis 10 C-Atomen, welche in α-Stellung zur Carboxylgruppe ein quartäres C-Atom aufweisen,
C) 0.05 bis 10 Gew.Teile einer oder mehrerer ethylenisch ungesättigter Dicarbonsäuren mit 3 bis 10 C-Atomen oder deren Anhydride,
D) 0 bis 50 Gew.Teile einer oder mehrerer ethylenisch ungesättigter Monomeren, deren Homopolymerisate eine Glasübergangstempertur oberhalb von 30°C aufweisen, und die Angaben in Gew.Teilen auf 100 Gew.Teile der Comonomer-Zusammensetzung bezogen sind.

2. Verwendung nach Anspruch 1, dadurch gekennzeichnet, daß die Vinylestercopolymerisate eine Glasübergangstemperatur T_{g} von 20 bis 100°C, einen Blockpunkt im Bereich von 30 bis 150°C und einen K-Wert von 25 bis 120 aufweisen und
A) 25 bis 85 Gew.Teile Vinylacetat,
B) 0 bis 55 Gew.Teile Vinylester von gesättigten, aliphatischen Monocarbonsäuren mit 9 C-Atomen, welche in α-Stellung zur Carboxylgruppe ein quartäres C-Atom aufweisen,
C) 0.5 bis 5 Gew.Teile eines oder mehrerer Comonomere aus der Gruppe Maleinsäure, Fumarsäure, Itaconsäure, Maleinsäureanhydrid, Allylbernsteinsäureanhydrid, Mesaconsäure, Citraconsäure und Citraconsäureanhydrid,
D) 0 bis 40 Gew.Teile eines oder mehrerer Comonomere aus der Gruppe Methylmethacrylat, tertiär-Butylacrylat, N-Vinylpyrrolidon, N-Vinylcarbazol, Dimethylmaleat, Diisopropylmaleat, Diisopropylfumarat, Di-tert.-butylmaleat, Di-tert.-butylfumarat, 4-tertiär-Butylcyclohexylacrylat enthalten.

3. Verwendung nach Anspruch 1 oder 2, dadurch gekennzeichnet, daß die Vinylestercopolymerisate eine Glasübergangstemperatur T_{g} von 30 bis 70°C, einen Blockpunkt im Bereich von 45 bis 100°C und einen K-Wert von 30 bis 80 aufweisen und
A) 40 bis 50 Gew.Teile Vinylacetat,
B) 40 bis 50 Gew.Teile Vinylester von gesättigten, aliphatischen Monocarbonsäuren mit 9 C-Atomen, welche in α-Stellung zur Carboxylgruppe ein quartäres C-Atom aufweisen,
C) 0.5 bis 3 Gew.Teile eines oder mehrerer Comonomere aus der Gruppe Maleinsäure, Fumarsäure, Itaconsäure, Maleinsäureanhydrid,
D) 5 bis 20 Gew.Teile eines oder mehrerer Comonomere aus der Gruppe Methylmethacrylat, tertiär-Butylacrylat, N-Vinylpyrrolidon, N-Vinylcarbazol, Dimethylmaleat, Diisopropylmaleat, Diisopropylfumarat, Di-tert.-butylmaleat, Di-tert.-butylfumarat, 4-tertiär-Butylcyclohexylacrylat enthalten.

4. Verwendung nach Anspruch 1 oder 2, dadurch gekennzeichnet, daß die Vinylestercopolymerisate eine Glasübergangstemperatur T_{g} von 30 bis 70°C, einen Blockpunkt im Bereich von 45 bis 100°C und einen K-Wert von 30 bis 80 aufweisen und
A) 45 bis 55 Gew.Teile Vinylacetat,
B) 45 bis 55 Gew.Teile Vinylester von gesättigten, aliphatischen Monocarbonsäuren mit 9 C-Atomen, welche in α-Stellung zur Carboxylgruppe ein quartäres C-Atom aufweisen,
C) 0.5 bis 3 Gew.Teile eines oder mehrerer Comonomere aus der Gruppe Maleinsäure, Fumarsäure, Itaconsäure, Maleinsäureanhydrid enthalten.

5. Verwendung nach Anspruch 1 oder 2, dadurch gekennzeichnet, daß die Vinylestercopolymerisate eine Glasübergangstemperatur T_{g} von 30 bis 70°C, einen Blockpunkt im Bereich von 45 bis 100°C und einen K-Wert von 30 bis 80 aufweisen und
A) 60 bis 85 Gew.Teile Vinylacetat,
C) 0.5 bis 3 Gew.Teile eines oder mehrerer Comonomere aus der Gruppe Maleinsäure, Fumarsäure, Itaconsäure, Maleinsäureanhydrid,
D) 15 bis 40 Gew.Teile eines oder mehrerer Comonomere aus der Gruppe Methylmethacrylat, tertiär-Butylacrylat, N-Vinylpyrrolidon, N-Vinylcarbazol, Dimethylmaleat, Diisopropylmaleat, Diisopropylfumarat, Di-tert.-butylmaleat, Di-tert.-butylfumarat, 4-tertiär-Butylcyclohexylacrylat enthalten.

6. Verwendung nach Anspruch 5, dadurch gekennzeichnet, daß die Vinylestercopolymerisate eine Glasübergangstemperatur T_{g} von 30 bis 70°C, einen Blockpunkt im Bereich von 45 bis 100°C und einen K-Wert von 30 bis 80 aufweisen und
A) 60 bis 85 Gew.Teile Vinylacetat,
C) 0.5 bis 3 Gew.Teile Fumarsäure und/oder Maleinsäureanhydrid,
D) 15 bis 40 Gew.Teile eines oder mehrerer Comonomere aus der Gruppe Dimethylmaleat, Diisopropylmaleat, Diisopropylfumarat, Di-tert.-butylmaleat, Di-tert.-butylfumarat, 4-tertiär-Butylcyclohexylacrylat enthalten.

7. Verwendung nach Anspruch 1 bis 6, dadurch gekennzeichnet, daß die Vinylestercopolymerisate mit dem Suspensionspolymerisationsverfahren hergestellt werden.

8. Verwendung nach Anspruch 1 bis 7, dadurch gekennzeichnet, daß als organische Lösungsmittel Carbonsäureester, Ketone, Alkohole oder Ether verwendet werden und der Festgehalt der Lösungen von 10 bis 70 Gew.% beträgt.

9. Vinylestercopolymerisate zusammengesetzt aus
A) 60 bis 85 Gew.Teilen Vinylacetat,
C) 0.5 bis 3 Gew.Teilen Fumarsäure und/oder Maleinsäureanhydrid,
D) 15 bis 40 Gew.Teilen eines oder mehrerer Comonomere aus der Gruppe Dimethylmaleat, Diisopropylmaleat, Diisopropylfumarat, Di-tert.-butylmaleat, Di-tert.-butylfumarat.

## Claims

1. Use of a coating agent composition which is based on a solution of vinyl ester copolymer in an organic solvent as a heat-sealing coating or primer coating for aluminium foil, the vinyl ester copolymer comprising
A) 20 to 90 parts by weight of a vinyl ester of saturated aliphatic monocarboxylic acids having 1 to 5 C atoms,
B) 0 to 70 parts by weight of a vinyl ester of saturated aliphatic monocarboxylic acids which have 9 to 10 C atoms and a quaternary C atom in the α-position relative to the carboxyl group,
C) 0.05 to 10 parts by weight of one or more ethylenically unsaturated dicarboxylic acids having 3 to 10 C atoms or anhydrides thereof and
D) 0 to 50 parts by weight of one or more ethylenically unsaturated monomers, the homopolymers of which have a glass transition temperature above 30°C and the data in parts by weight being based on 100 parts by weight of the comonomer composition.

2. Use according to Claim 1, characterized in that the vinyl ester copolymers have a glass transition temperature T_{g} of 20 to 100°C, a block point in the range from 30 to 150°C and a K value of 25 to 120 and comprise
A) 25 to 85 parts by weight of vinyl acetate,
B) 0 to 55 parts by weight of vinyl esters of saturated, aliphatic monocarboxylic acids which have 9 C atoms and a quaternary C atom in the α-position relative to the carboxyl group,
C) 0.5 to 5 parts by weight of one or more comonomers from the group comprising maleic acid, fumaric acid, itaconic acid, maleic anhydride, allylsuccinic anhydride, mesaconic acid, citraconic acid and citraconic anhydride and
D) 0 to 40 parts by weight of one or more comonomers from the group comprising methyl methacrylate, tert-butyl acrylate, N-vinylpyrrolidone, N-vinylcarbazole, dimethyl maleate, diisopropyl maleate, diisopropyl fumarate, di-tert-butyl maloate, di-tert-butyl fumarate and 4-tert-butylcyclohexyl acrylate.

3. Use according to Claim 1 or 2, characterized in that the vinyl ester copolymers have a glass transition temperature T_{g} of 30 to 70°C, a block point in the range from 45 to 100°C and a K value of 30 to 80 and comprise
A) 40 to 50 parts by weight of vinyl acetate,
B) 40 to 50 parts by weight of vinyl esters of saturated aliphatic monocarboxylic acids which have 9 C atoms and a quaternary C atom in the α-position relative to the carboxyl group,
C) 0.5 to 3 parts by weight of one or more comonomers from the group comprising maleic acid, fumaric acid, itaconic acid and maleic anhydride and
D) 5 to 20 parts by weight of one or more comonomers from the group comprising methyl methacrylate, tert-butyl acrylate, N-vinylpyrrolidone, N-vinylcarbazole, dimethyl maleate, diisopropyl maleate, diisopropyl fumarate, di-tert-butyl maleate, di-tert-butyl fumarate and 4-tert-butylcyclohexyl acrylate.

4. Use according to Claim 1 or 2, characterized in that the vinyl ester copolymers have a glass transition temperature T_{g} of 30 to 70°C, a block point in the range from 45 to 100°C and a K value of 30 to 80 and comprise
A) 45 to 55 parts by weight of vinyl acetate,
B) 45 to 55 parts by weight of vinyl esters of saturated aliphatic monocarboxylic acids which have 9 C atoms and a quaternary C atom in the α-position relative to the carboxyl group,
C) 0.5 to 3 parts by weight of one or more comonomers from the group comprising maleic acid, fumaric acid, itaconic acid and maleic anhydride.

5. Use according to Claim 1 or 2, characterized in that the vinyl ester copolymers have a glass transition temperature T_{g} of 30 to 70°C, a block point in the range from 45 to 100°C and a K value of 30 to 80 and comprise
A) 60 to 85 parts by weight of vinyl acetate,
C) 0.5 to 3 parts by weight of one or more comonomers from the group comprising maleic acid, fumaric acid, itaconic acid and maleic anhydride and
D) 15 to 40 parts by weight of one or more comonomers from the group comprising methyl methacrylate, tert-butyl acrylate, N-vinylpyrrolidone, N-vinylcarbazole, dimethyl maleate, diisopropyl maleate, diisopropyl fumarate, di-tert-butyl maleate, di-tert-butyl fumarate and 4-tert-butylcyclohexyl acrylate.

6. Use according to Claim 5, characterized in that the vinyl ester copolymers have a glass transition temperature T_{g} of 30 to 70°C, a block point in the range from 45 to 100°C and a K value of 30 to 80 and comprise
A) 60 to 85 parts by weight of vinyl acetate,
C) 0.5 to 3 parts by weight of fumaric acid and/or maleic anhydride and
D) 15 to 40 parts by weight of one or more comonomers from the group comprising dimethyl maleate, diisopropyl maleate, diisopropyl fumarate, di-tert-butyl maleate, di-tert-butyl fumarate and 4-tert-butyl-cyclohexyl acrylate.

7. Use according to Claim 1 to 6, characterized in that the vinyl ester copolymers are prepared by the suspension polymerization process.

8. Use according to Claim 1 to 7, characterized in that carboxylic acid esters, ketones, alcohols or ethers are used as the organic solvent and the solids content of the solutions is from 10 to 70 % by weight.

9. Vinyl ester copolymers composed of
A) 60 to 85 parts by weight of vinyl acetate,
C) 0.5 to 3 parts by weight of fumaric acid and/or maleic anhydride and
D) 15 to 40 parts by weight of one or more comonomers from the group comprising dimethyl maleate, diisopropyl maleate, diisopropyl fumarate, di-tert-butyl maleate and di-tert-butyl fumarate.

## Revendications

1. Utilisation d'une composition d'agent de revêtement à base d'une solution de copolymère d'ester vinylique dans un solvant organique comme laque thermosoudable ou revêtement primaire pour feuilles d'aluminium, où le copolymère d'ester vinylique contient
A) 20 à 90 parties en poids d'un ester vinylique d'acides monocarboxyliques aliphatiques saturés avec 1 à 5 atomes C;
B) 0 à 70 parties en poids d'un ester vinylique d'acides monocarboxyliques aliphatiques saturés avec 9 à 10 atomes C, lesquels présentent un atome C quaternaire en position alpha du groupe carboxyle;
C) 0,05 à 10 parties en poids d'un ou de plusieurs acides dicarboxyliques éthyléniquement insaturés avec 3 à 10 atomes C ou leurs anhydrides, et
D) 0 à 50 parties en poids d'un ou de plusieurs monomères éthyléniquement insaturés, leur homopolymère présentant une température de transition vitreuse supérieure à 30°C, et les données de parties en poids se rapportant à 100 parties en poids de composition de comonomères.

2. Utilisation suivant la revendication 1, caractérisée en ce que le copolymère d'ester vinylique présente une température de transition vitreuse Tv de 20 à 100°C, un point d'adhérence dans le domaine de 30 à 150°C et une valeur K de 25 à 120, et contient
A) 25 à 85 parties en poids d'acétate de vinyle;
B) 0 à 55 parties en poids d'un ester vinylique d'acides monocarboxyliques aliphatiques saturés avec 9 atomes C, lesquels présentent un atome C quaternaire en position alpha du radical carboxyle;
C) 0,5 à 5 parties en poids d'un ou de plusieurs comonomères du groupe constitué de l'acide maléique, de l'acide fumarique, de l'acide itaconique, de l'anhydride maléique, de l'anhydride allylsuccinique, de l'acide mésaconique, de l'acide citraconique et de l'anhydride citraconique, et
D) 0 à 40 parties en poids d'un ou de plusieurs comonomères du groupe constitué du méthacrylate de méthyle, de l'acrylate de t-butyle, de la N-vinylpyrrolidone, du N-vinylcarbazole, du maléate de diméthyle, du maléate de diisopropyle, du fumarate de diisopropyle, du maléate de di-t-butyle, du fumarate de di-t-butyle et de l'acrylate de 4-t-butylcyclohexyle.

3. Utilisation suivant la revendicatiuon 1 ou 2, caractérisée en ce que le copolymère d'ester vinylique présente une température de transition vitreuse Tv de 30 à 70°C, un point d'adhérence dans le domaine de 45 à 100°C et une valeur K de 30 à 80, et contient
A) 40 à 50 parties en poids d'acétate de vinyle;
B) 40 à 50 parties en poids d'un ester vinylique d'acides monocarboxyliques aliphatiques saturés avec 9 atomes C, lesquels présentent un atome C quaternaire en position alpha du radical carboxyle;
C) 0,5 à 3 parties en poids d'un ou de plusieurs comonomères du groupe constitué de l'acide maléique, de l'acide fumarique, de l'acide itaconique, de l'anhydride maléique, et
D) 5 à 20 parties en poids d'un ou de plusieurs comonomères du groupe constitué du méthacrylate de méthyle, de l'acrylate de t-butyle, de la N-vinylpyrrolidone, du N-vinylcarbazole, du maléate de diméthyle, du maléate de diisopropyle, du fumarate de diisopropyle, du maléate de di-t-butyle, du fumarate de di-t-butyle et de l'acrylate de 4-t-butylcyclohexyle.

4. Utilisation suivant la revendication 1 ou 2, caractérisée en ce que le copolymère d'ester vinylique présente une température de transition vitreuse Tv de 30 à 70°C, un point d'adhérence dans le domaine de 45 à 100°C et une valeur K de 30 à 80, et contient
A) 45 à 55 parties en poids d'acétate de vinyle;
B) 45 à 55 parties en poids d'un ester vinylique d'acides monocarboxyliques aliphatiques saturés avec 9 atomes C, lesquels présentent un atome C quaternaire en position alpha du radical carboxyle;
C) 0,5 à 3 parties en poids d'un ou de plusieurs comonomères du groupe constitué de l'acide maléique, de l'acide fumarique, de l'acide itaconique, de l'anhydride maléique.

5. Utilisation suivant la revendication 1 ou 2, caractérisée en ce que le copolymère d'ester vinylique présente une température de transition vitreuse Tv de 30 à 70°C, un point d'adhérence dans le domaine de 45 à 100°C et une valeur K de 30 à 80, et contient
A) 60 à 85 parties en poids d'acétate de vinyle;
C) 0,5 à 3 parties en poids d'un ou de plusieurs comonomères du groupe constitué de l'acide maléique, de l'acide fumarique, de l'acide itaconique, de l'anhydride maléique, et
D) 15 à 40 parties en poids d'un ou de plusieurs comonomères du groupe constitué du méthacrylate de méthyle, de l'acrylate de t-butyle, de la N-vinylpyrrolidone, du N-vinylcarbazole, du maléate de diméthyle, du maléate de diisopropyle, du fumarate de diisopropyle, du maléate de di-t-butyle, du fumarate de di-t-butyle et de l'acrylate de 4-t-butylcyclohexyle.

6. Utilisation suivant la revendication 5, caractérisée en ce que le copolymère d'ester vinylique présente une température de transition vitreuse Tv de 30 à 70°C, un point d'adhérence dans le domaine de 45 à 100°C et une valeur K de 30 à 80, et contient
A) 60 à 85 parties en poids d'acétate de vinyle;
C) 0,5 à 3 parties en poids d'acide fumarique et/ou d'anhydride maléique, et
D) 15 à 40 parties en poids d'un ou de plusieurs comonomères du groupe constitué du maléate de diméthyle, du maléate de diisopropyle, du fumarate de diisopropyle, du maléate de di-t-butyle, du fumarate de di-t-butyle et de l'acrylate de 4-t-butylcyclohexyle.

7. Utilisation suivant les revendications 1 à 6, caractérisée en ce que le copolymère d'ester vinylique est préparé par le procédé de polymérisation en suspension.

8. Utilisation suivant les revendications 1 à 7, caractérisée en ce que l'on utilise, comme solvant organique, un ester d'acide carboxylique, une cétone, un alcool ou un éther et que la teneur en matière solide de la solution atteint 10 à 70% en poids.

9. Composition de copolymère d'ester vinylique constituée de
A) 60 à 85 parties en poids d'acétate de vinyle;
C) 0,5 à 3 parties en poids d'acide fumarique et/ou d'anhydride maléique, et
D) 15 à 40 parties en poids d'un ou de plusieurs comonomères du groupe constitué du maléate de diméthyle, du maléate de diisopropyle, du fumarate de diisopropyle, du maléate de di-t-butyle, du fumarate de di-t-butyle.
